# EUROPEAN PATENT SPECIFICATION

(11) **EP 3 978 210 B1**
(45) Date of publication and mention of the grant of the patent: **20.08.2025**
(21) Application number: 20815490.6
(22) Date of filing: 09.03.2020
(51) Int. Cl.: B25J 9/16, F16P 3/14

(54) **SAFETY MONITORING SYSTEM, SAFETY MONITORING CONTROL DEVICE, AND SAFETY MONITORING METHOD**
SICHERHEITSÜBERWACHUNGSSYSTEM, SICHERHEITSÜBERWACHUNGSSTEUERUNGSVORRICHTUNG UND SICHERHEITSÜBERWACHUNGSSVERFAHREN
SYSTÈME DE SURVEILLANCE DE SÉCURITÉ, DISPOSITIF DE COMMANDE DE SURVEILLANCE DE SÉCURITÉ ET PROCÉDÉ DE SURVEILLANCE DE SÉCURITÉ

(30) Priority: 28.05.2019 JP 2019099356
(43) Date of publication of application: 06.04.2022
(73) Proprietor: OMRON Corporation, Shiokoji-dori, Shimogyo-Ku Kyoto-shi Kyoto 600-8530 (JP)
(72) Inventor: NING, Xiaoguang, Kyoto-shi, Kyoto 600-8530 (JP)
(74) Representative: Becker, Eberhard
(86) International application number: PCT/JP2020/009967
(87) International publication number: WO 2020/240977

(56) References cited:
- EP-B1- 3 248 740
- WO-A1-2018/230036
- CN-A- 109 634 269
- JP-A- 2014 176 932
- JP-A- 2016 209 953
- US-A1- 2019 030 716
- US-A1- 2019 061 158
- US-B2- 8 996 175

## Description

### BACKGROUND

### Technical Field

The present invention relates to a safety monitoring system or the like that controls equipment by grasping human movement in an environment in which equipment such as a robot and a human such as a worker coexist.

### Related Art

Conventionally, various attempts have been known to prevent a robot and a worker from inadvertently contacting each other at a production site such as a factory. For example,

Patent literature 1 below discloses a control method for a robot device that decelerates or stops the operation of a robot when intrusion of a worker is detected in a predetermined warning area wider than a movable area of the robot.

### [Literature of related art]

### [Patent literature]

Patent literature 1: Japanese Patent Application Laid-Open No. 2010-208002 (published on September 24, 2010)

US 2019/030716 Al relates to a method for controlling the operation of a robot within a system, including the robot and sensors to analyze the concentric environment of the system. The sensors include a contact sensor, a proximity sensor and a vision and location sensor. For each of the axes of the robot, a maximum allowable force value is obtained. If the force on one of the axes of the robot is greater than the maximum value, the robot is stopped in its position.

US 2019/061158 A1 relates to systems and methods to monitor a workspace for safety purposes using sensors distributed about the workspace. The sensors are registered with respect to each other, and this registration is monitored over time. Occluded space as well as occupied space is identified, and this mapping is frequently updated.

### SUMMARY

### [Problems to be Solved]

However, in the technique of Patent literature 1, operations of the robot and the worker are constantly monitored in a peripheral area of the robot to be monitored by one sensor. The sensor that monitors the peripheral area of the robot cannot grasp human movement at the entire factory site including the surrounding of the robot. Therefore, for example, in a case that the worker runs toward the robot from outside the peripheral area of the robot and in other cases, because a moving speed of the worker cannot be grasped, it is necessary to set a wide dangerous area in advance where the robot and the worker may come into contact with each other. As a result, there is a problem that the production efficiency is lowered because the operation of the robot is decelerated or stopped even when there is no possibility of contact between the robot and the worker.

One aspect of the present invention has been made in view of the above problems, and an objective of the present invention is to provide a safety monitoring system or the like that can grasp human movement more reliably, ensure human safety, and suppress restrictions on the operation of equipment at a production site where equipment such as a robot and a human coexist.

### [Means to Solve Problems]

The invention is set out in the appended set of claims. The following disclosure serves a better understanding of the present invention. In order to solve the above problems, a safety monitoring system according to one aspect of the present invention comprises at least all features as defined in appended system claim 1.

In addition, in order to solve the above problems, a safety monitoring method according to one aspect of the present invention comprises at least alls steps as defined in appended method claim 7.

### [Effect]

According to one aspect of the present invention, human movement can be grasped more reliably, human safety can be ensured, and restrictions on the operation of equipment can be suppressed at a production site where equipment such as a robot and a human coexist.

### BRIEF DESCRIPTION OF THE DRAWINGS

FIG. 1 is a block diagram showing an example of a main configuration of a safety monitoring system according to Embodiment 1 of the present invention.
FIG. 2 is a diagram illustrating an example of an overall outline of the safety monitoring system according to Embodiment 1 of the present invention.
FIG. 3 is a flowchart showing an example of the flow of processing executed by the safety monitoring system.

### DESCRIPTION OF THE EMBODIMENTS

### [Embodiment 1]

Hereinafter, an embodiment according to one aspect of the present invention (hereinafter, also referred to as "the present embodiment") is described with reference to the drawings. Moreover, in the following, the description proceeds based on an example in which the present invention is applied to a production site. However, it should be understood that the configuration of the present invention described in the claims can be applied not only to the production site but also to various industrial fields in which a human and equipment such as a robot coexist.

### §1 Application example

### <Overall outline of safety monitoring system>

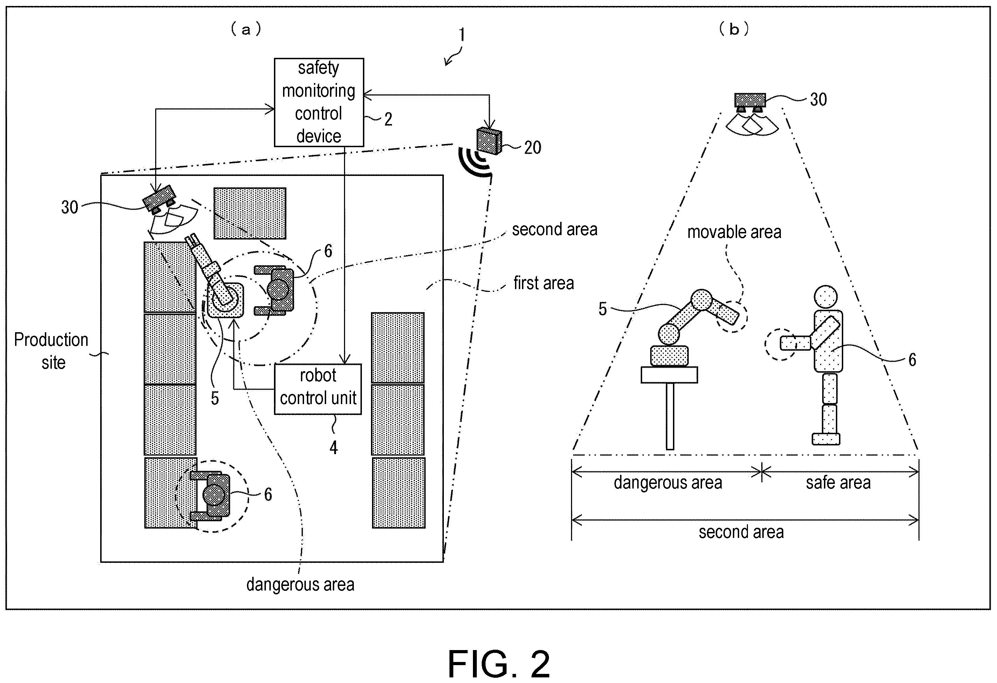

First, an example of the configuration to which the present invention is applied is described with reference to FIG. 2. FIG. 2 is a diagram illustrating an example of an overall outline of a safety monitoring system 1 according to the present embodiment. (a) of FIG. 2 is a diagram illustrating an example of the safety monitoring system 1 at a production site such as a factory. (b) of FIG. 2 is a diagram illustrating an example of safety monitoring by a second sensor 30.

At a production site such as a factory, when the possibility of contact between a robot 5 and a worker 6 is detected by monitoring a peripheral area of the robot 5 with a sensor, the control such as stopping the robot 5 is widely performed. In this existing environment, for example, by additionally arranging a sensor, such as a millimeter-wave radar, that can widely monitor the entire production site and measure a distance, a moving direction, a moving speed, and the like of an object to be monitored, it is possible to construct a flexible and diverse safety monitoring system according to the degree of danger. Note that, the worker 6 is not limited to a worker, but means all human beings existing at the production site.

As illustrated in (a) of FIG. 2, the safety monitoring system 1 to which the present invention is applied can grasp the movement of the worker 6 more reliably and suppress restrictions on the operation of the robot 5 in order to avoid inadvertent contact between the robot 5 and the worker 6 at a production site such as a factory where the robot 5 and the worker 6 (human) coexist as described above.

### (First sensor)

The safety monitoring system 1 includes a safety monitoring control device 2, a first sensor 20, and a second sensor 30. The safety monitoring control device 2 is a device that performs various controls and the like in order to make the safety monitoring system 1 function.

The first sensor 20 may be a sensor having a wide viewing angle and relatively low precision, and the second sensor 30 is a sensor having a narrow viewing angle but capable of detecting with high precision. Particularly, the first sensor 20 and the second sensor 30 have different monitoring ranges and the like. By combining the first sensor 20 and the second sensor 30 of different types in this way, the first sensor 20 and the second sensor 30 can function as a fusion sensor.

The first sensor 20 monitors the entire work area (first area) including a part of a warning area (second area), and monitors whether or not the worker 6 exists in the entire work area, and whether or not the worker 6 approaches the warning area when the worker 6 exists in the entire work area. Here, the work area is an area where work such as production is actually performed at a production site where equipment such as a robot and a human coexist. In addition, the entire work area is an area of the entire monitoring range monitored by the first sensor 20 in the work area. The warning area is the peripheral area of the robot 5, and is set including a part of a dangerous area. The dangerous area is an area where the robot 5 and the worker 6 may come into contact with each other if the worker 6 invades.

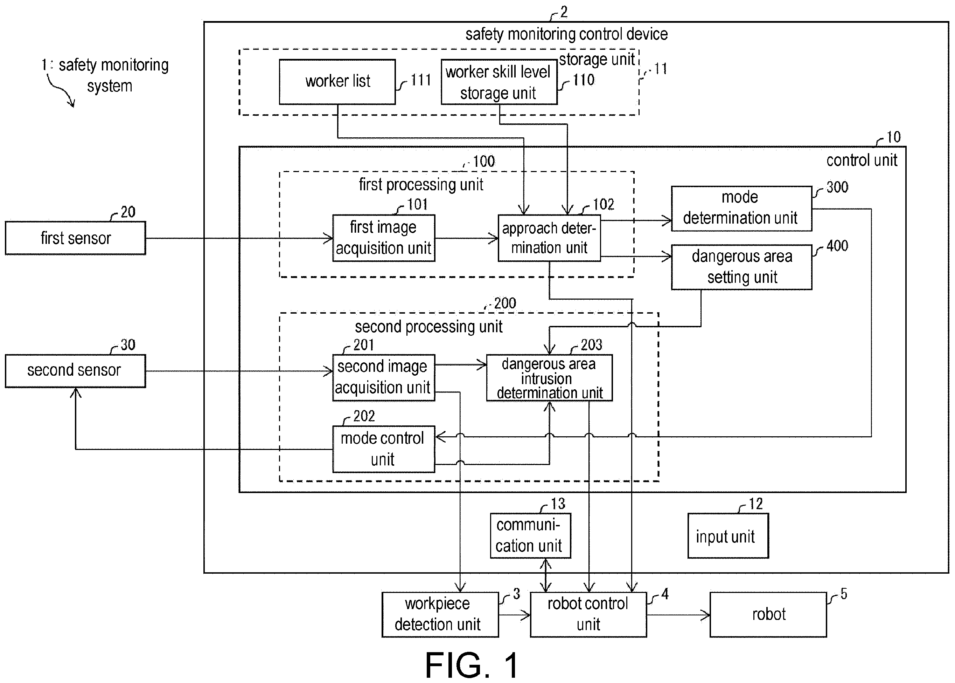

When the approach of the worker 6 to the warning area is detected, a mode determination unit 300 (shown in FIG. 1) switches a second processing unit 200 to a "safety monitoring mode" (second mode), and a robot control unit 4 performs control such as decelerating the robot 5. The second processing unit 200 has two modes, namely a "safety monitoring mode" and a "normal mode" (first mode), and can switch between the two modes according to the degree of risk of contact between the robot 5 and the worker 6. The safety monitoring mode is a mode when a first processing unit 100 detects the approach of the worker 6 to the warning area, that is, when there is a high risk of contact between the robot 5 and the worker 6. On the other hand, the normal mode is a mode when the first processing unit 100 does not detect the approach of the worker 6 to the warning area, that is, when there is a low risk of contact between the robot 5 and the worker 6.

As the first sensor 20, a sensor capable of monitoring a wide range and detecting positions, moving speeds, and the like of a plurality of robots 5 and workers 6 is used. For example, known light detection and ranging (LiDAR,), radio detection and ranging (RADAR), millimeter-wave radar, vision sensor, or the like can be used to realize the first sensor 20. Particularly, by using the millimeter-wave radar, it is possible to detect the position, moving direction, moving speed and so on of the worker 6 or the like in a wide range even in a production factory with a lot of lighting or dust. The millimeter-wave radar can detect a shape of an object and a distance to the object within the monitoring range, and can output the shape and the distance as an image.

### (Second sensor)

Next, an example of monitoring by the second sensor 30 is described based on (b) of FIG. 2. The second sensor 30 monitors the warning area (second area), and when the worker 6 approaches the warning area, the second sensor 30 precisely monitors the degree of approach between the worker 6 and the robot 5. The second sensor 30 monitors, in particular, whether or not the worker 6 has invaded the dangerous area set around the robot 5.

Here, the dangerous area and the warning area are described in detail. The robot 5 is, for example, a robot including an articulated manipulator, and has one or a plurality of movable parts such as an arm. As described above, the dangerous area is an area where the movable part of the robot 5 and the worker 6 may come into contact with each other when the worker 6 invades. The warning area includes a safe area where the worker 6 does not come into contact with the movable part of the robot 5 even if the worker 6 invades, and the dangerous area where the worker 6 may come into contact with the movable part of the robot 5.

The dangerous area may be set in advance by a factory manager or the like, or may be dynamically set by a dangerous area setting unit 400 (shown in FIG. 1) of the safety monitoring control device 2 as described later based on FIG. 1.

When the robot control unit 4 detects that the worker 6 has invaded the dangerous area, the robot control unit 4 performs control such as stopping the movement of the arm of the robot 5.

As the second sensor 30, a sensor having a narrow viewing angle and capable of detecting with high precision is used. For example, a known vision sensor, time of flight sensor (TOF sensor), depth sensor, or the like can be used to realize the second sensor 30.

The first sensor 20 and the second sensor 30 transmit the detected image data to the safety monitoring control device 2 wirelessly or by wire. The safety monitoring control device 2 recognizes the image data from both sensors and grasps the movement of the worker 6. The safety monitoring control device 2 controls the mode of the second processing unit 200 and the operation of the robot 5 based on this information.

Thereby, the movement of the worker 6 can be grasped more reliably, the safety of the worker 6 can be ensured, and the restriction on the operation of the robot 5 can be suppressed.

### §2 Configuration

FIG. 1 is a block diagram showing the main configuration of the safety monitoring system 1 according to Embodiment 1 of the present invention. An example of the main configuration of the safety monitoring system 1 is described based on FIG. 1.

The safety monitoring system 1 includes the safety monitoring control device 2, the first sensor 20, and the second sensor 30. The safety monitoring control device 2 is a device that performs various controls and the like in order to make the safety monitoring system 1 function.

The safety monitoring control device 2 includes a control unit 10 that supervises and controls each part of the safety monitoring control device 2, a storage unit 11 that stores various data used by the safety monitoring control device 2, an input unit 12 that receives input operations, and a communication unit 13 for communicating with other devices. The storage unit 11 may be a storage unit inside the safety monitoring control device 2, or may be a server, a storage, or the like outside the safety monitoring control device 2.

The control unit 10 includes: the first processing unit 100 that control modes of the robot 5 and the second processing unit 200 based on image data from the first sensor 20; the second processing unit 200 that controls the robot 5 based on image data from the second sensor 30; the mode determination unit 300 that determines the mode of the second processing unit 200; and the dangerous area setting unit 400 that dynamically sets the dangerous area.

The storage unit 11 stores a worker skill level storage unit 110 in which skill levels of all the workers 6 are stored, and a list of the worker 6 currently existing in the work area.

### (First processing unit)

The first processing unit 100 includes: a first image acquisition unit 101 that acquires the image data detected by the first sensor 20 and sends the acquired image data to an approach determination unit 102; and the approach determination unit 102 that extracts the worker 6 from the image data sent from the first image acquisition unit 101 and determines the movement of the worker 6.

First, the first sensor 20 monitors the entire work area and transmits image data of the entire work area to the first image acquisition unit 101 wirelessly or by wire. The first image acquisition unit 101 sends the acquired image data to the approach determination unit 102. The approach determination unit 102 attempts to extract the worker 6 from the sent image data by image recognition. When the worker 6 is extracted as a result of the image recognition, it is determined that the worker 6 exists in the work area, and when the worker 6 is not extracted, it is determined that the worker 6 does not exist in the work area.

When it is determined that the worker 6 exists, the approach determination unit 102 further determines whether or not this extracted worker 6 approaches the warning area. As described above, the first sensor 20 can detect the moving direction or the moving speed of the object to be monitored, so that the approach determination unit 102 can determine whether or not the worker 6 approaches the warning area.

When it is determined that the worker 6 does not approach the warning area, there is no possibility that the worker 6 and the robot 5 come into contact with each other, so that the approach determination unit 102 continues normal image recognition processing.

When it is determined that the worker 6 approaches the warning area, the worker 6 and the robot 5 may come into contact with each other, so that the approach determination unit 102 transmits information wirelessly or by wire to the robot control unit 4 via the communication unit 13 to make the robot control unit 4 perform control such as deceleration of the operation of the robot 5.

In addition, the approach determination unit 102 notifies the mode determination unit 300 that the worker 6 is approaching the warning area. Upon receiving the notification, the mode determination unit 300 sends an instruction of switching the mode of the second processing unit 200 from the first mode to the second mode to a mode control unit 202. Upon receiving the instruction, the mode control unit 202 switches the mode of the second processing unit 200 to the second mode.

Thereby, the second processing unit 200 can perform different operations according to the degree of risk of contact between the robot 5 and the worker 6.

Note that, here, the approach determination unit 102 is included in the safety monitoring control device 2 and has a configuration different from the first sensor 20, but the approach determination unit 102 may have a configuration of being included in the first sensor 20.

### (Second processing unit)

The second processing unit 200 includes: a second image acquisition unit 201 that acquires the image data detected by the second sensor 30 and sends the acquired image data to a dangerous area intrusion determination unit 203; the dangerous area intrusion determination unit 203 that extracts the worker 6 from the image data sent from the second image acquisition unit 201 and determines the movement of the worker 6; and the mode control unit 202 that controls the mode of the second processing unit 200.

First, the second sensor 30 monitors the warning area and transmits image data of the warning area to the second image acquisition unit 201 wirelessly or by wire. The second image acquisition unit 201 sends the acquired image data to the dangerous area intrusion determination unit 203. The dangerous area intrusion determination unit 203 extracts the worker 6 from the sent image data by image recognition, and determines whether or not the extracted worker 6 has invaded the dangerous area. As described above, the second sensor 30 can detect the object to be monitored with high precision, so that the degree of approach between the worker 6 and the robot 5 can be precisely detected.

When the dangerous area intrusion determination unit 203 determines that the worker 6 has not invaded the dangerous area, the robot control unit 4 continues the control such as decelerating the operation of the robot 5 until the worker 6 leaves the warning area.

When the dangerous area intrusion determination unit 203 determines that the worker 6 has invaded the dangerous area, the dangerous area intrusion determination unit 203 transmits information wirelessly or by wire to the robot control unit 4 via the communication unit 13 to make the robot control unit 4 perform control such as stopping of the operation of the robot 5.

By monitoring the warning area with the second sensor 30 having high precision in this way, the second processing unit 200 can ensure the safety of the worker 6.

Note that, here, the dangerous area intrusion determination unit 203 is included in the safety monitoring control device 2 and has a configuration different from the second sensor 30, but the dangerous area intrusion determination unit 203 may have a configuration of being included in the second sensor 30.

### (Mode switching)

Here, the mode switching of the second processing unit 200 is described. The mode determination unit 300 determines that the mode of the second processing unit 200 is the first mode (normal mode) when the first processing unit 100 does not detect the approach of the worker 6 to the warning area, that is, when there is a low risk of contact between the robot 5 and the worker 6. On the other hand, the mode determination unit 300 determines that the mode of the second processing unit 200 is the second mode (safety monitoring mode) when the first processing unit 100 detects the approach of the worker 6 to the warning area, that is, when there is a high risk of contact between the robot 5 and the worker 6. The mode determination unit 300 sends determination results to the mode control unit 202. The mode control unit 202 switches the mode of the second processing unit 200 to the mode transmitted from the mode determination unit 300.

When the first mode is determined, the second processing unit 200 can perform processing different from that of the second mode. In the second mode, because there is a high risk of contact between the robot 5 and the worker 6, the second processing unit 200 needs to perform image recognition in order to detect the intrusion of the worker 6 into the dangerous area. However, in the first mode in which there is a low risk of contact between the robot 5 and the worker 6, the second processing unit 200 can perform processing different from that of the second mode.

In the first mode, the second processing unit 200 can stop the image recognition for detecting the intrusion into the dangerous area. Thereby, when the resource of image processing is limited, the resource can be allocated only to the second sensor 30 to which the worker 6 is approaching.

In addition, in the first mode, the second processing unit 200 can stop the operation by stopping power supply to the second sensor 30. Thereby, the second sensor 30 to which the worker 6 is not approaching is stopped to reduce power consumption.

In addition, in the first mode, the second processing unit 200 can stop the image recognition, detect a position or shape of the workpiece that is a work object of the robot 5, and transmit the position or shape to a workpiece detection unit 3 via the communication unit 13. The workpiece detection unit 3 can send the received workpiece information to the robot control unit 4. Thereby, the facility can be simplified by giving the second sensor 30 two functions of safety monitoring and workpiece detection. In addition, when the resource of image processing is limited, it is possible to switch between two different types of image processing, namely safety monitoring and workpiece detection, to perform processing, and thus a resource load can be reduced.

Furthermore, the second processing unit 200 can send an instruction to the robot control unit 4 to operate the robot 5 at a higher speed in the first mode than in the second mode. Thereby, in the first mode in which there is a low risk of contact between the robot 5 and the worker 6, the production efficiency can be improved by operating the robot faster than usual.

In this way, the second processing unit 200 operates differently according to the degree of risk of contact between the robot 5 and the worker 6, and thereby a more flexible and diverse safety monitoring system than before can be constructed.

### §3 Flow of processing

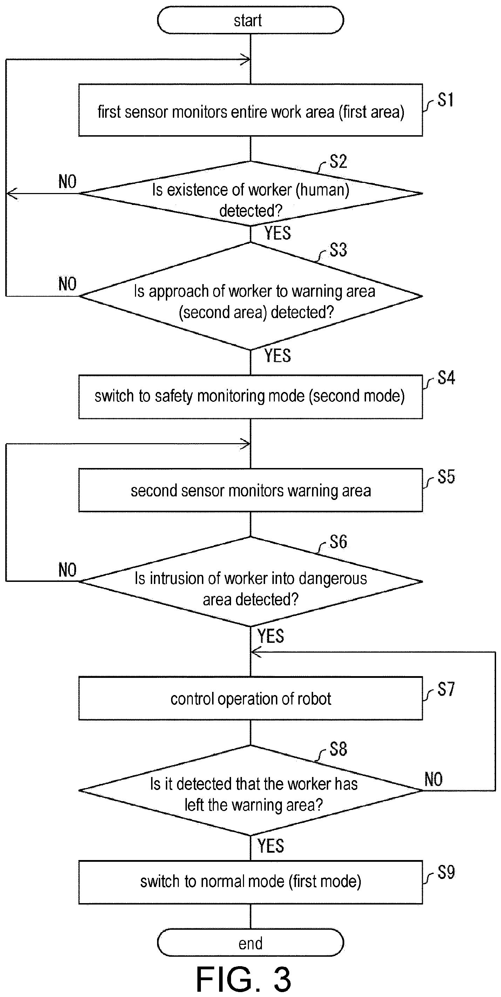

A flow of the processing in the safety monitoring system 1 is described based on FIG. 3. FIG. 3 is a flowchart showing an example of the flow of the processing in the safety monitoring system 1.

In S1, the first sensor 20 monitors the entire work area, and transmits the image data of the entire work area to the first image acquisition unit 101. The first image acquisition unit 101 sends the image data to the approach determination unit 102, and the processing proceeds to S2.

In S2, the approach determination unit 102 determines absence or existence of the worker 6 by image recognition from the image data acquired by the first sensor 20. When it is determined that the worker 6 exists (YES in S2), the processing proceeds to S3. On the other hand, when it is determined that the worker 6 does not exist (NO in S2), the processing proceeds to S10.

In S3, the approach determination unit 102 further detects the moving direction or the moving speed of the extracted worker 6, and determines whether or not the worker 6 approaches the warning area. When it is determined that the worker 6 approaches the warning area (YES in S3), the processing proceeds to S4. On the other hand, when it is determined that the worker 6 does not approach the warning area (NO in S3), the processing proceeds to S10.

In S4, the mode control unit 202 switches the mode of the second processing unit 200 from the first mode to the second mode. In addition, the robot control unit 4 decelerates the operation of the robot 5, and the processing proceeds to S5.

In S5, the second sensor 30 monitors the warning area, and transmits the image data of the warning area to the second image acquisition unit 201. The second image acquisition unit 201 sends the image data to the dangerous area intrusion determination unit 203, and the processing proceeds to S6.

In S6, the dangerous area intrusion determination unit 203 determines whether or not the worker 6 has invaded the dangerous area by image recognition. When it is determined that the worker 6 has invaded (YES in S6), the processing proceeds to S7. On the other hand, when it is determined that the worker 6 has not invaded (NO in S6), the processing returns to S5, and the processing of S5 and the processing of S6 are repeated.

In S7, the robot control unit 4 performs control such as stopping the operation of the robot 5.

In S8, the dangerous area intrusion determination unit 203 and the approach determination unit 102 determine whether or not the worker 6 has gone out of the dangerous area and has left the warning area. When it is determined that the worker 6 has left the warning area (YES in S8), the processing proceeds to S9. On the other hand, when it is determined that the worker 6 has not left the warning area (NO in S8), the processing returns to S7, and the processing of S7 and the processing of S8 are repeated.

In S9, the mode control unit 202 switches the mode of the second processing unit 200 from the second mode to the first mode.

The safety monitoring system 1 repeatedly executes the processing S1 to S9 until the production at the factory is completed.

Thereby, the movement of the worker 6 can be grasped more reliably, the safety of the worker 6 can be ensured, and the restriction on the operation of the robot 5 can be suppressed.

### [Embodiment 2]

Other embodiments of the present invention are described below. For convenience of description, the same reference signs are given to those having the same functions as those described in the above Embodiment 1, and the description thereof is not repeated. The same applies to Embodiment 3 and subsequent embodiments.

In the example described above, an example in which the dangerous area where the robot 5 and the worker 6 may come into contact with each other is set in advance based on a movable area of the robot 5 has been described. However, there may be a configuration in which the dangerous area setting unit 400 determines a dangerous range to set a dangerous area.

Conventionally, it has been necessary to set a wide dangerous area in advance in case the worker 6 runs and approaches the robot 5. However, by adopting a sensor that can monitor the entire work area and detect the position, the moving direction, the moving speed, and the like of the object to be monitored as the first sensor 20, the dangerous area can be set dynamically according to the speed at which the worker 6 approaches the robot 5.

The approach determination unit 102 detects the approach speed of the worker 6 from the image data of the first sensor 20, and sends the detected approach speed to the dangerous area setting unit 400. When the approach speed of the worker 6 is fast, the dangerous area setting unit 400 sets a wide dangerous area, and when the approach speed of the worker 6 is slow, the dangerous area setting unit 400 sets a narrow dangerous area. Thereby, unnecessary restrictions on the operation of the robot 5 can be suppressed, and production efficiency can be improved.

### [Embodiment 3]

The dangerous area setting unit 400 can set the dangerous area or the control method of the robot 5 based on the skill level of the worker 6. A worker list 111 stores a list of the workers 6 currently existing in the work area, and a worker skill level storage unit 110 stores information on the skill level such as skills and experiences of all the workers 6.

The dangerous area setting unit 400 reads out the list of the workers 6 currently existing in the work area from the worker list 111, and acquires from the worker skill level storage unit 110 the skill level of the worker 6 read out. The dangerous area setting unit 400 sets the dangerous area or the control method of the robot 5 according to the skill level of the worker 6.

For example, when the worker 6 is a beginner, a wide dangerous area is set, and when the worker 6 invades the dangerous area, the robot 5 is controlled to be decelerated, avoided, or stopped. Here, avoidance means changing a track of the movable part of the robot to avoid contact with the worker 6.

On the other hand, when the worker 6 is an expert, a narrow dangerous area is set, and when the worker 6 invades the dangerous area, a warning or the like can be issued to alert the worker 6 without restricting the operation of the robot 5. Thereby, it is possible to suppress unnecessary restrictions on the operation of the robot 5 and improve production efficiency.

Note that, the worker list 111 may be input from the input unit 12 by the factory manager, the worker 6, or the like, or may be read from a RF tag or the like carried by the worker 6 and transmitted via the communication unit 13.

When, for example, an autonomous indoor vehicle (AIV, autonomous robot for transportation) exists in the work area, it is necessary to distinguish between the AIV and the worker 6. The reason is that, if the worker 6 approaches the warning area, it is necessary to perform control such as deceleration of the robot 5, but even if the AIV approaches the warning area, it is not necessary to control the robot 5.

Because the first sensor 20 can detect a size, a height, a moving speed, and the like of the object to be monitored, the first sensor 20 can distinguish between and detect the AIV and the worker 6. In addition, when the detection result of the first sensor 20 is compared with position information of the AIV stored in a predetermined server, precision of distinguishing the AIV from the worker 6 can be further improved.

In this way, it is possible to prevent misidentification between the AIV and the worker 6, suppress unnecessary restrictions on the operation of the robot 5 due to the approach of the AIV, and improve production efficiency. Moreover, when the AIV exists but the worker 6 does not exist, the robot 5 may be configured to operate at a higher speed. Thereby, the production efficiency can be further improved.

### <Modification example>

Each processing described in the above embodiments can be changed as appropriate. For example, when there are a plurality of robots 5, one second sensor 30 can monitor a plurality of warning areas by utilizing the first sensor 20.

The second sensor 30 is a sensor capable of simultaneously monitoring a plurality of locations with high precision, and can, for example, control a focus by a beamforming method. The second sensor 30 can focus on the warning area to which the worker 6 approaches among the plurality of warning areas from the image data of the first sensor 20 to detect a distance between the worker 6 and the robot 5.

In addition, the second sensor 30 may be arranged so as to be movable on a track connecting the plurality of warning areas, and the second sensor 30 may be moved to the warning area to which the worker 6 approaches for monitoring.

Thereby, one second sensor 30 can monitor a plurality of warning areas, so that the facility can be simplified.

### [Example of implementation by software]

Control blocks of the safety monitoring control device 2 (particularly, the first processing unit 100, the second processing unit 200, the mode determination unit 300, and the dangerous area setting unit 400 of the control unit 10) may be implemented by a logic circuit (hardware) formed in an integrated circuit (IC chip) or the like, or may be implemented by software.

In the latter case, the safety monitoring control device 2 includes a computer that executes instructions of a program being software that implements each function. The computer includes, for example, at least one processor (control device) and at least one computer-readable recording medium that stores the program. Besides, in the computer, the processor reads the program from the recording medium and executes the program, and thereby the object of the present invention is achieved. The processor may be, for example, a central processing unit (CPU). The recording medium may be a "non-temporary tangible medium", such as a read only memory (ROM), as well as a tape, a disk, a card, a semiconductor memory, a programmable logic circuit, or the like. In addition, the recording medium may further include a random access memory (RAM) or the like that deploys the above program. Additionally, the above program may be supplied to the computer via any transmission medium capable of transmitting the program (communication network, broadcast wave, or the like). Further, one aspect of the present invention may also be implemented in a form of a data signal embedded in a carrier wave, in which the above program is embodied by electronic transmission.

The present invention is not limited to each embodiment described above, various modifications can be made within the scope of the claims, and embodiments obtained by appropriately combining the technical means disclosed in different embodiments are also included in the technical scope of the present invention.

### <Summary>

In order to solve the above problems, a safety monitoring system according to one aspect of the present invention includes: a second sensor that monitors a second area including a part of a dangerous area set around a robot; a first sensor that monitors a first area including a part of the second area; a first processing unit that recognizes an image acquired by the first sensor and detects approach of a human to the second area; a second processing unit that recognizes an image acquired by the second sensor and detects intrusion of the human into the dangerous area; and a mode determination unit. The mode determination unit determines a first mode when the first processing unit does not detect the approach of the human to the second area, and determines a second mode when the first processing unit detects the approach of the human to the second area. Operation of the second processing unit differs between the first mode and the second mode.

According to the above configuration, the second processing unit operates differently according to the degree of risk of contact between the robot and the human, and thereby a more flexible and diverse safety monitoring system than before can be constructed.

In the safety monitoring system according to one aspect of the present invention, image recognition for detecting the intrusion of a human into the dangerous area is executed in the second mode and stopped in the first mode in the second processing unit.

According to the above configuration, in the second mode in which there is a high risk of contact between the robot and the human, the second processing unit executes image recognition in order to detect the intrusion of the human into the dangerous area. On the other hand, in the first mode in which there is a low risk, the resource load of image processing can be reduced by stopping the image recognition of the second sensor in which the human is not approaching the robot.

In the safety monitoring system according to one aspect of the present invention, the second sensor may be stopped in the first mode.

According to the above configuration, in the second mode in which there is a high risk of contact between the robot and the human, the second processing unit executes image recognition in order to detect the intrusion of the human into the dangerous area. On the other hand, in the first mode in which there is a low risk, power consumption can be reduced by stopping the second sensor in which the human is not approaching the robot.

The safety monitoring system according to one aspect of the present invention may further include a workpiece detection unit that recognizes the image acquired by the second sensor and detects a workpiece that is a work object of the robot in the first mode.

According to the above configuration, in the second mode in which there is a high risk of contact between the robot and the human, the second processing unit executes image recognition in order to detect the intrusion of the human into the dangerous area. On the other hand, in the first mode in which there is a low risk, the second processing unit stops the execution of image recognition, detects the position or the shape of the workpiece which is the work object of the robot and sends the position or the shape to the robot control unit for the work of the robot. In this way, by giving the second sensor two functions, namely safety monitoring and workpiece detection, the facility can be simplified. In addition, when the resource of image processing is limited, it is possible to switch between two different types of image processing, namely safety monitoring and workpiece detection, to perform processing, and thus the resource load can be reduced.

The safety monitoring system according to one aspect of the present invention may further include a robot control unit that controls the robot, and the robot control unit operates the robot at a higher speed in the first mode than in the second mode.

According to the above configuration, in the second mode in which there is a high risk of contact between the robot and the human, the operation of the robot is decelerated in order to ensure the safety of the human. On the other hand, in the first mode in which there is a low risk, the production efficiency can be improved by operating the robot faster than usual.

The safety monitoring system according to one aspect of the present invention may further include a dangerous area setting unit that changes a range of the dangerous area according to a speed detected by the first processing unit at which a human approaches the second area.

According to the above configuration, because the dangerous area around the robot can be dynamically set, it is not necessary to set the dangerous area wider than necessary in advance, and unnecessary restrictions on the operation of the robot can be suppressed.

In the safety monitoring system according to one aspect of the present invention, the first processing unit may further identify and detect a human approaching the second area, and the safety monitoring system may further include a dangerous area setting unit that changes a range of the dangerous area according to the human approaching the second area identified and detected by the first processing unit.

According to the above configuration, it is possible to set a dangerous area around the robot or select a control method of the robot such as stopping, deceleration, warning based on the skill level of the worker and the like. Therefore, it is not necessary to set the dangerous area wider than necessary, and unnecessary restrictions on the operation of the robot can be suppressed.

In the safety monitoring system according to one aspect of the present invention, the first sensor may be a millimeter-wave radar. By using a millimeter-wave radar, it is possible to detect the positions, moving speeds, and the like of a plurality of robots or workers in a wide range even in a production factory with a lot of lighting or dust.

In addition, in order to solve the above problems, a safety monitoring control device according to one aspect of the present invention includes: a first processing unit that recognizes an image acquired by a first sensor monitoring a first area including a part of a second area around a robot, and detects approach of a human to the second area; a second processing unit that recognizes an image acquired by a second sensor monitoring the second area, and detects intrusion of the human into a dangerous area set around the robot, which is a part of the second area; and a mode determination unit. The mode determination unit determines a first mode when the first processing unit does not detect the approach of the human to the second area, and determines a second mode when the first processing unit detects the approach of the human to the second area. Operation of the second processing unit differs between the first mode and the second mode.

According to the above configuration, the second processing unit operates differently according to the degree of risk of contact between the robot and the human, and thereby more flexible and diverse safety monitoring than before can be performed.

In addition, in order to solve the above problems, a safety monitoring method according to one aspect of the present invention includes: a first processing step of recognizing an image acquired by a first sensor that monitors a first area including a part of a second area around a robot, and detecting approach of a human to the second area; a second processing step of recognizing an image acquired by a second sensor that monitors the second area, and detecting intrusion of the human into a dangerous area set around the robot; and a mode determination step of determining a first mode when the first processing step does not detect the approach of the human to the second area, and determining a second mode when the first processing step detects the approach of the human to the second area. The second processing step is stopped in the first mode and executed in the second mode.

### [Reference Signs List]

- 1: safety monitoring system
- 2: safety monitoring control device
- 3: workpiece detection unit
- 4: robot control unit
- 5: robot
- 6: worker (human)
- 20: first sensor
- 30: second sensor
- 100: first processing unit
- 200: second processing unit
- 300: mode determination unit
- 400: dangerous area setting unit

## Claims

1. A safety monitoring system (1), comprising:
a first sensor (20) configured to monitor a first area, the first area including a part of a second area, the second area including a dangerous area around a robot (5), which is an area where the robot (5) and a human (6) may come into contact with each other;
a second sensor (30) configured to monitor the second area;
a first processing unit (100) configured to determine a movement of a human (6) from an image acquired by the first sensor (20) and detects approach of the human (6) to the second area;
a second processing unit (200) configured to determine the movement of the human (6) from an image acquired by the second sensor (30) and detects intrusion of the human (6) into the dangerous area; and
a mode determination unit (300),
wherein the mode determination unit (300) determines a first mode when the first processing unit (100) does not detect the approach of the human (6) to the second area, and switches the second processing unit to a second mode when the first processing unit (100) detects the approach of the human (6) to the second area, and
operation of the second processing unit (200) differs between the first mode and the second mode,
**characterized in that**
determining the movement of the human (6) from the image acquired by the second sensor (30) and detecting intrusion of the human (6) into the dangerous area are executed in the second mode and stopped in the first mode in the second processing unit (200), and
wherein the second sensor (30) is stopped in the first mode.

2. The safety monitoring system (1) according to claim 1, further comprising a workpiece detection unit (3) configured to recognize the image acquired by the second sensor (30) and detect a workpiece that is a work object of the robot in the first mode.

3. The safety monitoring system (1) according to claim 1 or 2, further comprising a robot control unit (4) configured to control the robot,
wherein the robot control unit (4) is configured to operate the robot at a higher speed in the first mode than in the second mode.

4. The safety monitoring system (1) according to any one of claims 1 to 3, further comprising a dangerous area setting unit (400) configured to change a range of the dangerous area according to a speed detected by the first processing unit (100) at which the human approaches the second area.

5. The safety monitoring system (1) according to any one of claims 1 to 3, wherein the first processing unit (100) configured to further identify and detect the human approaching the second area, and
the safety monitoring system (1) further comprises a dangerous area setting unit (400) configured to change a range of the dangerous area according to the human approaching the second area identified and detected by the first processing unit (100).

6. The safety monitoring system (1) according to any one of claims 1 to 5, wherein the first sensor (20) is a millimeter-wave radar.

7. A safety monitoring method, **characterized by**, comprising:
a first processing step of determining a movement of a human (6) from an image acquired by a first sensor (20) that monitors a first area including a part of a second area, the second area including a dangerous area set around a robot, and detecting approach of the human (6) to the second area,
wherein the dangerous area is an area where the robot (5) and the human (6) may come into contact with each other;
a second processing step of determining the movement of the human (6) from an image acquired by a second sensor (30) configured to monitor the second area, and detecting intrusion of the human (6) into the dangerous area; and
a mode determination step of determining a first mode when the first processing step does not detect the approach of the human (6) to the second area, and switching to a second mode when the first processing step detects the approach of the human (6) to the second area.
wherein the second processing step is stopped in the first mode and executed in the second mode, and
wherein the second sensor (30) is stopped in the first mode.

## Patentansprüche

1. Sicherheitsüberwachungssystem (1), aufweisend
einen ersten Sensor (20), der so eingerichtet ist, dass er einen ersten Bereich überwacht, wobei der erste Bereich einen Teil eines zweiten Bereichs enthält, wobei der zweite Bereich eine Gefahrenzone um einen Roboter (5), bei der es sich um einen Bereich handelt, in dem der Roboter (5) und eine Person (6) miteinander in Kontakt gelangen können, enthält;
einen zweiten Sensor (30), der so eingerichtet ist, dass er den zweiten Bereich überwacht,
eine erste Verarbeitungseinheit (100), die so eingerichtet ist, dass sie aus einem Bild, das durch den ersten Sensor (20) erlangt wurde, eine Bewegung einer Person (6) bestimmt und eine Annäherung der Person (6) an den zweiten Bereich detektiert;
eine zweite Verarbeitungseinheit (200), die so eingerichtet ist, dass sie aus einem Bild, das durch den zweiten Sensor (30) erlangt wurde, die Bewegung der Person (6) bestimmt und ein Eindringen der Person (6) in die Gefahrenzone detektiert; und
eine Modusbestimmungseinheit (300),
wobei die Modusbestimmungseinheit (300) einen ersten Modus bestimmt, wenn die erste Verarbeitungseinheit (100) keine Annäherung der Person (6) an den zweiten Bereich detektiert, und
die zweite Verarbeitungseinheit zu einem zweiten Modus umschaltet, wenn die erste Verarbeitungseinheit (100) die Annäherung der Person (6) an den zweiten Bereich detektiert, wobei sich der Betrieb der zweiten Verarbeitungseinheit (200) in dem ersten Modus und dem zweiten Modus unterscheidet,
**dadurch gekennzeichnet, dass**
das Bestimmen der Bewegung der Person (6) aus dem Bild, das durch den zweiten Sensor (30) erlangt wurde, und das Detektieren des Eindringens der Person (6) in die Gefahrenzone in der zweiten Verarbeitungseinheit (200) in dem zweiten Modus ausgeführt werden und in dem ersten Modus angehalten werden, und
wobei der zweite Sensor (30) in dem ersten Modus angehalten ist.

2. Sicherheitsüberwachungssystem (1) nach Anspruch 1, ferner aufweisend eine Werkstückdetektionseinheit (3), die so eingerichtet ist, dass sie in dem ersten Modus das Bild, das durch den zweiten Sensor (30) erlangt wurde, erkennt und ein Werkstück, das ein Arbeitsgegenstand des Roboters ist, detektiert.

3. Sicherheitsüberwachungssystem (1) nach Anspruch 1 oder 2, ferner aufweisend eine Robotersteuereinheit (4), die so eingerichtet ist, dass sie den Roboter steuert,
wobei die Robotersteuereinheit (4) so eingerichtet ist, dass sie den Roboter in dem ersten Modus mit einer höheren Geschwindigkeit als in dem zweiten Modus betreibt.

4. Sicherheitsüberwachungssystem (1) nach einem der Ansprüche 1 bis 3, ferner aufweisend eine Gefahrenzonenfestlegeeinheit (400), die so eingerichtet ist, dass sie ein Ausmaß der Gefahrenzone je nach einer durch die erste Verarbeitungseinheit (100) detektierten Geschwindigkeit, mit der sich die Person dem zweiten Bereich nähert, ändert.

5. Sicherheitsüberwachungssystem (1) nach einem der Ansprüche 1 bis 3, wobei die erste Verarbeitungseinheit (100) so eingerichtet ist, dass sie ferner die Person, die sich dem zweiten Bereich nähert, identifiziert und detektiert, und
das Sicherheitsüberwachungssystem (1) ferner eine Gefahrenzonenfestlegeeinheit (400) aufweist, die so eingerichtet ist, dass sie ein Ausmaß der Gefahrenzone je nach der durch die erste Verarbeitungseinheit (100) identifizierten und detektierten Person, die sich dem zweiten Bereich nähert, ändert.

6. Sicherheitsüberwachungssystem (1) nach einem der Ansprüche 1 bis 5, wobei der erste Sensor (20) ein Millimeterwellenradar ist.

7. Sicherheitsüberwachungsverfahren, **dadurch gekennzeichnet, dass** es
einen ersten Verarbeitungsschritt, bei dem aus einem Bild, das durch einen ersten Sensor (20), der einen ersten Bereich, der einen Teil eines zweiten Bereichs enthält, überwacht, wobei der zweite Bereich eine Gefahrenzone, die um einen Roboter herum festgelegt ist, enthält, erlangt wurde, eine Bewegung einer Person (6) bestimmt wird und eine Annäherung der Person (6) an den zweiten Bereich detektiert wird, wobei die Gefahrenzone ein Bereich ist, in dem der Roboter (5) und die Person (6) miteinander in Kontakt gelangen können;
einen zweiten Verarbeitungsschritt, bei dem aus einem Bild, das durch einen zweiten Sensor (30), der so eingerichtet ist, dass er den zweiten Bereich überwacht, erlangt wurde, die Bewegung der Person (6) bestimmt wird und ein Eindringen der Person (6) in die Gefahrenzone detektiert wird; und
einen Modusbestimmungsschritt, bei dem ein erster Modus bestimmt wird, wenn der erste Verarbeitungsschritt keine Annäherung der Person (6) detektiert, und zu einem zweiten Modus umgeschaltet wird, wenn der erste Verarbeitungsschritt die Annäherung der Person (6) an den zweiten Bereich detektiert,
wobei der zweite Verarbeitungsschritt in dem ersten Modus angehalten ist und in dem zweiten Modus ausgeführt wird, und
wobei der zweite Sensor (30) in dem ersten Modus angehalten ist.

## Revendications

1. Système de surveillance de sécurité (1), comprenant :
un premier capteur (20) configuré pour surveiller une première zone, la première zone incluant une partie d'une deuxième zone, la deuxième zone incluant une zone dangereuse autour d'un robot (5), qui est une zone dans laquelle le robot (5) et un être humain (6) peuvent entrer en contact l'un avec l'autre ;
un deuxième capteur (30) configuré pour surveiller la deuxième zone ;
une première unité de traitement (100) configurée pour déterminer un mouvement d'un être humain (6) à partir d'une image acquise par le premier capteur (20) et détecter que l'être humain (6) s'approche de la deuxième zone ;
une deuxième unité de traitement (200) configurée pour déterminer le mouvement de l'être humain (6) à partir d'une image acquise par le deuxième capteur (30) et détecter une intrusion de l'être humain (6) dans la zone dangereuse ; et
une unité de détermination de mode (300),
dans lequel l'unité de détermination de mode (300) détermine un premier mode lorsque la première unité de traitement (100) ne détecte pas que l'être humain (6) s'approche de la deuxième zone, et commute la deuxième unité de traitement dans un deuxième mode lorsque la première unité de traitement (100) détecte que l'être humain (6) s'approche de la deuxième zone, et
le fonctionnement de la deuxième unité de traitement (200) diffère entre le premier mode et le deuxième mode,
**caractérisé en ce que**
la détermination du mouvement de l'être humain (6) à partir de l'image acquise par le deuxième capteur (30) et la détection d'une intrusion de l'être humain (6) dans la zone dangereuse sont exécutées dans le deuxième mode et arrêtées dans le premier mode dans la deuxième unité de traitement (200), et
dans lequel le deuxième capteur (30) est arrêté dans le premier mode.

2. Système de surveillance de sécurité (1) selon la revendication 1, comprenant en outre une unité de détection de pièce d'ouvrage (3) configurée pour reconnaître l'image acquise par le deuxième capteur (30) et détecter une pièce d'ouvrage qui est un objet de travail du robot dans le premier mode.

3. Système de surveillance de sécurité (1) selon la revendication 1 ou 2, comprenant en outre une unité de commande de robot (4) configurée pour commander le robot,
dans lequel l'unité de commande de robot (4) est configurée pour faire fonctionner le robot à une vitesse plus grande dans le premier mode que dans le deuxième mode.

4. Système de surveillance de sécurité (1) selon l'une quelconque des revendications 1 à 3, comprenant en outre une unité de réglage de zone dangereuse (400) configurée pour changer une étendue de la zone dangereuse en fonction d'une vitesse détectée par la première unité de traitement (100) à laquelle l'être humain s'approche de la deuxième zone.

5. Système de surveillance de sécurité (1) selon l'une quelconque des revendications 1 à 3, dans lequel la première unité de traitement (100) est configurée pour en outre identifier et détecter que l'être humain s'approche de la deuxième zone, et
le système de surveillance de sécurité (1) comprend en outre une unité de réglage de zone dangereuse (400) configurée pour changer une étendue de la zone dangereuse en fonction de l'identification et de la détection par la première unité de traitement (100) que l'être humain s'approche de la deuxième zone.

6. Système de surveillance de sécurité (1) selon l'une quelconque des revendications 1 à 5, dans lequel le premier capteur (20) est un radar à ondes millimétriques.

7. Procédé de surveillance de sécurité, **caractérisé en ce qu'**il comprend :
une première étape de traitement consistant à déterminer un mouvement d'un être humain (6) à partir d'une image acquise par un premier capteur (20) qui surveille une première zone incluant une partie d'une deuxième zone, la deuxième zone incluant une zone dangereuse réglée autour d'un robot et détecter que l'être humain (6) s'approche de la deuxième zone,
dans lequel la zone dangereuse est une zone dans laquelle le robot (5) et un être humain (6) peuvent entrer en contact l'un avec l'autre ;
une deuxième étape de traitement consistant à déterminer le mouvement de l'être humain (6) à partir d'une image acquise par un deuxième capteur (30) configuré pour surveiller la deuxième zone, et détecter une intrusion de l'être humain (6) dans la zone dangereuse ; et
une étape de détermination de mode consistant à déterminer un premier mode lorsque la première étape de traitement ne détecte pas que l'être humain (6) s'approche de la deuxième zone, et commuter dans un deuxième mode lorsque la première étape de traitement détecte que l'être humain (6) s'approche de la deuxième zone,
dans lequel la deuxième étape de traitement est arrêtée dans le premier mode et exécutée dans le deuxième mode, et
dans lequel le deuxième capteur (30) est arrêté dans le premier mode.
